Europäisches Patentamt

European Patent Office

Office européen des brevets

(19)

(11) **EP 0 760 119 B1**

(12) **FASCICULE DE BREVET EUROPEEN**

(45) Date de publication et mention
de la délivrance du brevet:
**19.08.1998 Bulletin 1998/34**

(21) Numéro de dépôt: **95920958.6**

(22) Date de dépôt: **18.05.1995**

(51) Int Cl.⁶: **G06F 7/52**

(86) Numéro de dépôt international:
**PCT/FR95/00655**

(87) Numéro de publication internationale:
**WO 95/32465 (30.11.1995 Gazette 1995/51)**

(54) **DISPOSITIF DE MISE EN UVRE NUMERIQUE D'UNE OPERATION DE DIVISION**

**ANORDNUNG ZUR DIGITALEN DURCHFÜHRUNG EINER DIVISIONSOPERATION**

**DEVICE FOR DIGITALLY CARRYING OUT A DIVISION OPERATION**

(84) Etats contractants désignés:
**DE FR GB IT**

(30) Priorité: **20.05.1994 FR 9406214**

(43) Date de publication de la demande:
**05.03.1997 Bulletin 1997/10**

(73) Titulaire: **SGS-THOMSON MICROELECTRONICS
S.A.
94250 Gentilly (FR)**

(72) Inventeur: **CURTET, Joel
F-38600 Fontaine (FR)**

(74) Mandataire: **Schmit, Christian Norbert Marie
Cabinet BALLOT-SCHMIT,
16, avenue du Pont Royal
94230 Cachan (FR)**

(56) Documents cités:
**FR-A- 1 554 668**

• **PATENT ABSTRACTS OF JAPAN vol. 14 no. 426
(P-1105) 13 Septembre 1990 & JP,A,02 165326
(MATSUSHITA ELECTRIC) 26 Juin 1990**

## Description

L'invention concerne un dispositif de mise en oeuvre numérique d'une opération de division adaptée à une méthode du type à non-restauration des restes partiels. Elle s'applique plus particulièrement au calcul de divisions binaires de nombres entiers ou fractionnels (virgule fixe) . Elle s'applique tout particulièrement aux processeurs de traitement de signal.

Le calcul de divisions binaires utilise principalement des opérations de comparaison et de soustraction. Il doit par ailleurs tenir compte d'un certain nombre de problèmes, tel le format des opérandes (fractionnel ou entier) , le signe du résultat, la survenance de résultats partiels nuls qui peuvent entraîner un résultat non valide, etc. En général, on utilise un registre pour le dividende que l'on appellera accumulateur, qui contient ensuite pour chaque pas de division, le reste calculé sur les bits de plus fort poids et le quotient sur les bits de plus faible poids, et un registre source pour le diviseur.

Pour pouvoir traiter indifféremment des formats entiers ou fractionnels, signés ou non signés, on utilise une solution dite à non-restauration des restes partiels, basé sur le signe du résultat de la soustraction ou de l'addition du reste partiel et du diviseur. Comme son intitulé l'indique, les résultats partiels peuvent ne pas être justes : à un pas de division donné, si le bit de quotient calculé au pas d'avant est nul, comme on aura pourtant soustrait le diviseur, il faudrait ajouter le diviseur au reste partiel, pour retrouver le reste partiel juste.

Pour chaque étape de la division, il faut calculer le nouveau quotient et le nouveau reste partiel.

Plusieurs mises en oeuvre de l'algorithme dans un dispositif de calcul sont possibles. Dans l'invention, on s'intéresse à une mise en oeuvre utilisant le même registre contenant au départ le dividende, pour mémoriser les restes partiels successifs et le quotient tout au long de la division. Le reste est mémorisé sur les bits de poids le plus fort et le quotient sur les bits de poids le plus faible. Cette mise en oeuvre comprend les opérations successives suivantes, pour chaque pas de division i :

- Décalage du registre contenant le reste partiel et le quotient d'une position vers la gauche;
- Introduction de l'inverse du bit de quotient complémenté calculé au pas i-1 précédent sur la position la plus à droite du registre;
- Calcul du reste partiel par addition ou soustraction du diviseur cadré sur les bits de poids fort du registre, selon la valeur binaire du bit de quotient complémenté calculé au pas i-1 de division précédent;
- Calcul du bit de quotient complémenté pour le pas i+1 suivant, fonction du signe du nouveau reste partiel et du signe du diviseur.

Ce processus continue jusqu'à ce que l'on ait effectué n décalages, en considérant que le diviseur à n bits de grandeur, et que l'on veuille obtenir un quotient de n bits de grandeur.

Mais cet algorithme suppose qu'un certain nombre de conditions soient vérifiées, pour que le quotient final soit juste.

En particulier, si lors d'un pas de division on a un reste partiel nul, le quotient obtenu après le dernier pas de division peut être faux. En effet, un nombre nul est considéré comme positif. Pour une division binaire, le signe du reste d'un pas i de division est comparé au signe du diviseur. On voit donc que si le diviseur est négatif, le reste nul qui est interprété comme positif est mal interprété, conduisant à une addition du diviseur et non à une soustraction au pas de division suivant. Le quotient final est donc faux. On le corrige en lui rajoutant un "1" sur la position la moins significative.

De plus, la détection d'un reste partiel nul n'est pas évidente, car le reste et le quotient ont une taille variable : à chaque pas de division, le reste perd un bit, de grandeur tandis que le quotient en gagne un : ce sont donc des opérandes de taille variable, fonction du pas de division. Comme ils sont dans le même registre, il faudrait une circuiterie complexe pour suivre l'évolution de la taille du reste, en fonction du pas de division et déterminer sur combien de bits doit se faire le décodage de zéro.

Comme autres conditions, il faut aussi que le dividende soit plus petit en valeur absolue que le diviseur, sinon la division n'est pas possible. En division signée, il faut aussi savoir si le diviseur et le dividende sont de même signe ou de signes opposés, pour rajouter ou non une unité sur la position la moins significative du quotient et corriger en conséquence le quotient, quand le diviseur et le dividende sont de signes opposés.

Il faut donc traiter différentes conditions pour obtenir le bon résultat. Ceci est réalisé au moyen de routines dites d'exceptions fournies ou à écrire par l'utilisateur selon les besoins de son application (format, grandeur des nombres à traiter). Outre que ces routines sont couteuses en temps, il est aussi possible qu'elles ne traitent pas bien tous les cas, faute de ne pas suivre pas à pas la division : elles sont réalisées avant, pour vérifier que la division est possible ou après, pour éventuellement corriger le quotient obtenu.

Pour simplifier la mise en oeuvre de l'algorithme, notamment le problème des restes partiels nuls, certains constructeurs de ces dispositifs de calcul, ont limité le format des opérandes en entrée. Par exemple, certains dispositifs ne travaillent que sur des opérandes positifs ou que sur des diviseurs positifs : on n'a plus le problème des diviseurs négatifs. Mais il faut d'autres routines, pour tester les signes et les mémoriser, et pour transformer les opérandes négatifs en opérandes positifs avant le calcul, et une routine pour rendre son bon signe au quotient après le calcul.

Ils ont encore prévu un registre pour le reste et un registre pour le quotient, pour faciliter la détection du reste partiel nul, cette solution compliquant cependant la gestion de ces registres pour la division.

Tous ces choix de registres, de routines d'exception, de mises au bon format et de correction du quotient augmentent le nombre de cycles instruction et donc le temps de calcul. Et si on veut avoir un reste final juste, il faut encore traiter différentes conditions pour déterminer si il est juste et le corriger le cas échéant.

Un objet de l'invention est un dispositif de calcul comprenant des circuits pour détecter un reste nul en cours de division.

L'invention est définie dans la revendication 1.

Telle que revendiquée, l'invention concerne un dispositif de mise en oeuvre numérique d'une opération de division selon une méthode de type à non-restauration de reste partiel, comprenant une unité arithmétique et logique pour calculer les restes partiels, caractérisé en ce qu'il comprend un circuit de détection d'un reste partiel nul au cours de la division.

Selon l'invention, le diviseur ayant un format sur n bits, le reste partiel a un format sur p bits, $p \geq n$, cadrés sur les bits les plus significatifs d'un registre accumulateur. Le test du reste partiel au pas de division i est effectué après l'addition ou la soustraction au contenu de l'accumulateur du diviseur cadré sur les n bits les plus significatifs du reste, et consiste à tester si les n bits les plus significatifs du nouveau reste, de positions (p-n) à (p-1), plus le bit moins significatif suivant de position (p-1-n) sont tous nuls, pour positionner à 1 un bit d'information indiquant un reste partiellement nul, ou à zéro sinon et, si ce bit d'information est déjà positionné à 1, à tester seulement le bit de position (p-1-n), pour maintenir à 1 le bit d'information, si il est nul, ou le remettre à 0, dans le cas contraire.

Le terme reste partiellement nul, signifie que l'on sait seulement que les bits de poids forts testés du reste partiel calculé au pas de division i sont nuls, le test du bit de position (p-1-n) aux pas suivants de division permettant de vérifier, au fur et à mesure que le contenu du registre accumulateur est décalé vers la gauche, si les autres bits du reste partiel du pas i trouvé partiellement nul sont aussi nuls, permettant alors de savoir si le reste partiel du pas i était bien entièrement nul.

Un autre objet de l'invention est de prendre en compte une seule fois les différentes conditions de correction du quotient. Selon l'invention, le dispositif comprend des circuits combinatoires pour calculer une correction à appliquer au quotient en fin de division.

Selon l'invention, cette correction est avantageusement appliquée sur l'entrée de retenue de l'unité arithmétique et logique.

Un autre objet de l'invention est de calculer à chaque pas de division le bit de quotient complémenté pour le pas suivant de division, pour l'introduire au moyen d'un multiplexeur en entrée de l'unité arithmétique et logique sur le bit le moins significatif du quotient.

D'autres caractéristiques et avantages sont présentés dans la description qui suit, faite à titre indicatif et non limitatif de l'invention et en référence aux dessins annexés dans lesquels :

- la figure 1 représente un schéma-bloc d'un dispositif de mise en oeuvre d'une division binaire selon l'invention et
- la figure 2 représente un schéma bloc de la fonction de détection de restes partiels nuls selon l'invention.

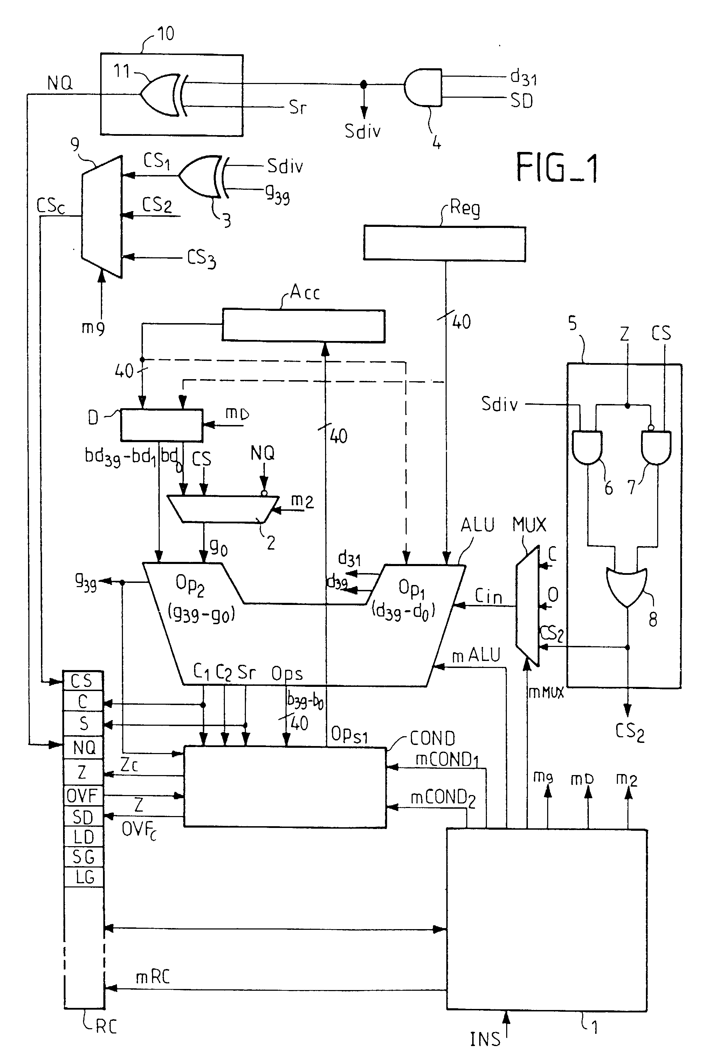

Un schéma bloc d'un dispositif de calcul selon l'invention est représenté à la figure 1.

Il comprend principalement une unité de traitement logique et arithmétique ALU commandée par une unité de commande 1. Dans l'exemple représenté, on a un dispositif de calcul à 40 bits dont 32 bits de grandeur significatifs et 8 bits d'extension.

Les opérandes en entrée de l'unité arithmétique et logique ont ainsi 8 bits d'extension mis à zéro en représentation non signée ou reprenant le bit de signe en représentation signée. Le bit de signe des opérandes dans l'unité arithmétique et logique est donc donné par les bits en position 31 à 39 (pour des positions allant de 0 à 39).

L'unité arithmétique et logique a deux entrées $Op_1$ et $Op_2$ pour recevoir respectivement un opérande droit et un opérande gauche et une sortie $Op_s$ pour fournir le résultat d'une opération arithmétique ou logique.

Les opérandes peuvent être de type signé ou non signé et au format long (32 bits de grandeur) ou court (16 bits de grandeur).

Le type et le format des opérandes qui influent sur les opérations de calcul dans l'unité arithmétique et logique sont définis dans un registre de condition RC :

- SG pour le type signé (1) ou non signé (0) de l'opérande gauche, et SD pour l'opérande droit.
- LG pour le format long (1) ou court (0) de l'opérande droit. Pour un format court, les opérandes sont cadrés à gauche, c'est à dire que le bit de poids le plus fort du nombre se retrouve sur le bit de position 31, (avec la convention déjà vue), les 16 bits de poids faible étant complétés par des zéros, et les 8 bits d'extension avec le bit de signe ou avec des zéros.

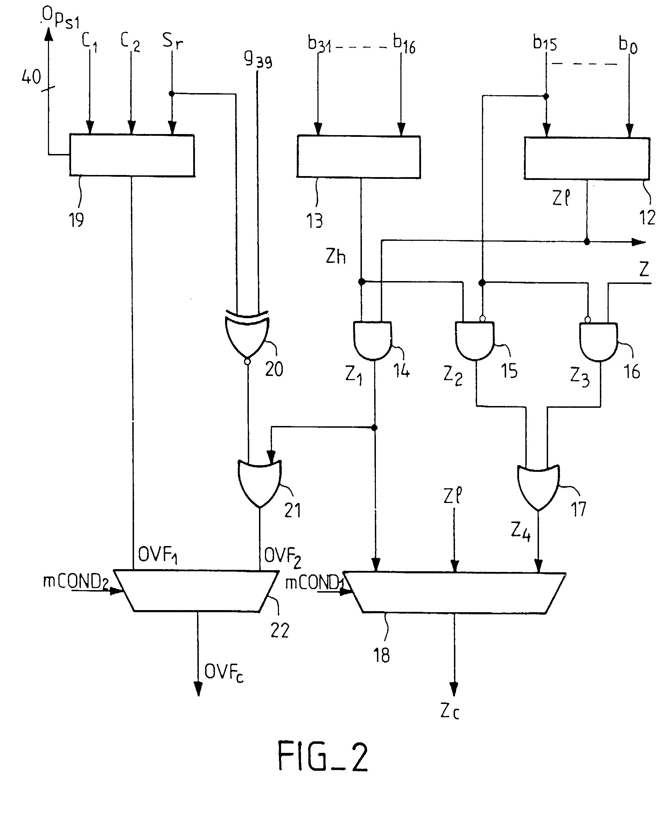

L'unité arithmétique et logique délivre aussi des informations arithmétiques à savoir notamment les deux bits de report de plus fort poids $C_1$, $C_2$ et le bit de signe Sr du résultat. Les bits d'information $C_1$ et Sr sont fournis à la fin du calcul au registre de condition RC. Dans l'exemple, le bit $C_1$ est appliqué sur le bit C de retenue de ce registre et le bit Sr est appliqué sur le bit S de signe. Les bits C et S représentent à un moment donné des informations sur le dernier résultat calculé. $C_1$, $C_2$ et Sr sont aussi appliqués à un circuit conditionnel COND qui délivre d'autres bits d'information vers le registre de condition CR, dont un bit $Z_c$ indiquant que les 32 bits significatifs du résultat en sortie de l'unité arithmétique et logique sont nuls et un bit de dépassement de capacité $OVF_c$ indiquant que le résultat dépasse le format utilisé. Ce circuit fournit sur une sortie $OP_{s1}$ le

résultat calculé par l'unité arithmétique et logique ou bien, en cas de détection de dépassement de capacité, une valeur saturée correspondant au maximum ou au minimum du format. Dans l'invention, ce circuit conditionnel reçoit aussi comme bits d'information, le bit de signe de l'opérande gauche, $g_{39}$ dans l'exemple. Ce circuit conditionnel selon l'invention est détaillé plus loin, en référence à la figure 2.

Selon l'invention, le bit Z a une autre signification en division : c'est le bit d'information de reste partiellement nul, calculé par ce même circuit de condition COND, comme on le verra plus loin.

Les opérandes sont fournis à l'unité arithmétique et logique par des registres sources. Dans l'exemple, l'opérande gauche est fourni par un accumulateur Acc qui est aussi un registre destination de la sortie de l'unité arithmétique et logique, via le circuit conditionnel COND (sortie Ops1). L'opérande droit est fourni par un registre source noté Reg.

Selon l'invention, entre les registres sources et l'entrée $Op_2$ de l'unité arithmétique et logique, on a un décaleur D et un multiplexeur 2. Ce décaleur D est de préférence un registre à barillet et permet d'appliquer un décalage arithmétique ou logique d'un nombre quelconque de positions vers la droite ou vers la gauche du contenu d'un registre source, avant de l'appliquer sur une entrée d'opérande de l'unité arithmétique et logique, dans l'exemple, l'opérande gauche. Dans l'invention, se pourrait aussi être un décaleur plus simple permettant de faire au moins un décalage d'une position vers la gauche.

Les bits en sortie de ce décaleur, notés $bd_0$-$bd_{39}$, sont appliqués sur les bits $g_0$-$g_{39}$ de l'entrée de l'opérande gauche $Op_2$. Plus précisément, les bits $bd_1$-$bd_{39}$ sont appliqués directement sur les bits correspondants de l'opérande gauche. Selon l'invention, le bit $bd_0$ est appliqué en entrée du multiplexeur logique 2 qui reçoit comme autres entrées, un bit de comparaison de signe CS et un bit de quotient complémenté NQ, en provenance du registre de condition RC. Ce multiplexeur délivre un bit en sortie appliqué sur le bit $g_0$ de l'opérande gauche.

Selon l'invention, pour effectuer une division, on place le dividende dans l'accumulateur en entrée de l'unité arithmétique et logique avec décaleur, l'opérande gauche dans l'exemple, et le diviseur dans le registre source sur l'autre opérande, droit dans l'exemple.

Selon l'invention, le bit de comparaison de signe CS du registre de condition RC est issu de différents circuits conditionnels utilisés pour la division, et peut représenter, selon l'étape de division concerné, le bit de comparaison de signe du dividende et du diviseur ou un bit de correction du quotient.

Un premier circuit conditionnel 3 délivre un premier bit $CS_1$, indiquant le signe différent ($CS_1=1$) ou non ($CS_1=0$) du diviseur (opérande droit) et du dividende (opérande gauche), qui sera utilisé pour déterminer le premier bit du quotient (bit de signe) et pour calculer la correction éventuelle du quotient. Dans un exemple de réalisation représenté sur la figure 1, il est constitué d'une porte logique OU exclusif qui reçoit en entrée le bit de signe de l'opérande gauche et le bit de signe de l'opérande droit. Il délivre en sortie un premier bit de comparaison de signe noté $CS_1$. Dans le cas choisi d'un dispositif de calcul avec bits d'extension, le bit de signe est donné, pour un nombre signé, par le bit le plus significatif (position 31 ici) et tous les bits d'extension (qui sont la recopie de ce bit 31). Dans le cas d'un nombre non signé, le signe est forcément positif, et le bit le plus significatif (position 31) ne représente plus le signe, mais une grandeur du nombre représenté, le nombre étant alors étendu jusqu'au bit 39 avec des zéros. Aussi, si on veut positionner le bit $CS_1$ correctement dans tous les cas, on choisit un bit d'extension, par exemple les bits de position 39 de l'opérande gauche et droit. On peut aussi faire un ET logique entre le type signé ou non de l'opérande et le bit de position 31 pour obtenir le signe vrai de l'opérande dans tous les cas. C'est ce qui est représenté avec une porte ET 4 qui fournit le signe du diviseur sur l'opérande droit noté Sdiv, à partir du bit du type SD du registre de condition et le bit $d_{31}$.

Selon l'invention, un deuxième circuit conditionnel 5 délivre un deuxième bit $CS_2$ qui représente la correction à appliquer au quotient à la fin de la division.

Dans l'exemple, il comprend trois portes logiques 6 7 et 8. Il reçoit en entrées, les bits Z, CS et le bit Sdiv qui indique comme on l'a vu le signe du diviseur, quel que soit son type signé ou non signé. Le bit Z représente dans ce cas le bit d'information de reste partiellement nul selon l'invention.

La porte 6 est une porte ET logique qui reçoit comme entrées, ce bit Z et le bit Sdiv de signe du diviseur.

La porte 7 est une porte ET logique qui reçoit ce même bit Z sur une entrée inverseuse et le bit de comparaison de signe CS du registre RC sur une entrée normale. La porte 8 est une porte OU qui reçoit en entrées, les sorties des portes 6 et 7 précédentes. Elle délivre un bit de sortie logique qui est le deuxième bit $CS_2$ de correction du quotient.

Un troisième bit $CS_3$ est prévu, permettant à l'unité de commande 1 d'écrire directement si le dividende et le diviseur sont ou non de même signe, à la place du circuit 3 (ceci dans les cas où le signe du diviseur et du dividende sont préalablement connus).

Les trois bits $CS_1$, $CS_2$ et $CS_3$ sont appliqués sur un multiplexeur 9 dont la sortie permet de commuter l'un ou l'autre bit sur le bit $CS_C$ qui est mémorisé dans le bit CS du registre de condition RC.

L'unité arithmétique et logique reçoit aussi un bit Cin qui permet d'appliquer ou non une retenue sur le bit de position la moins significative. En général et comme représenté, un multiplexeur Mux reçoit en entrée le bit de report C du registre de condition et un bit forcé à zéro, pour appliquer l'une ou l'autre entrée, selon que les opérations se font avec ou sans retenue dans l'unité arithmétique et logique.

Selon l'invention, une entrée supplémentaire est prévue sur le multiplexeur Mux pour recevoir le bit $CS_2$ de correction calculé par le circuit conditionnel 5 décrit précédemment.

Enfin, le bit de quotient complémenté NQ du registre de condition est fourni par un circuit conditionnel 10, qui compare le signe du diviseur au signe du reste (après l'opération de soustraction ou d'addition du diviseur). Le signe du diviseur est donné comme on l'a déjà vu par le bit Sdiv, et le signe du reste concerné ici est fourni par le bit de signe du résultat calculé par l'unité arithmétique et logique, c'est à dire le bit Sr, en général correspondant au bit de position 39 du résultat ($b_{39}$).

Dans l'exemple représenté sur la figure 1, il comprend une porte 11 OU exclusif (XOR) qui reçoit en entrées le bit Sdiv et le bit Sr. La sortie de cette porte 11 donne le bit de quotient complémenté qui est mémorisé dans le bit NQ du registre de condition RC.

Le circuit conditionnel COND selon l'invention va maintenant être détaillé en relation avec la figure 2. Il comprend une première partie comprenant des circuits 12 à 18 pour établir le bit Z représentant ou bien un résultat nul ou bien l'information de reste partiellement nul selon l'invention et une deuxième partie comprenant des circuits 19 à 22 pour établir le bit OVF représentant ou bien un dépassement de capacité ou bien une division impossible selon l'invention.

La première partie reçoit les 16 bits les moins significatifs $b_0$-$b_{15}$ sur un premier circuit 12 de comparaison à zéro qui fournit un bit de sortie ZI égal à 1, si tous les bits d'entrée sont égal à zéro, égal à 0 sinon. Les 16 bits suivants $b_{16}$ à $b_{31}$ sont appliqués en entrée d'un deuxième circuit 13 de comparaison à zéro. Il délivre un bit de sortie Zh égal à 1, si tous les bits d'entrée $b_{16}$ à $b_{31}$ sont égal à zéro, égal à 0 sinon. Les circuits 12 et 13 sont réalisés simplement au moyen par exemple de quatre portes NON OU, une pour quatre bits suivies d'une porte ET à quatre entrées (non représentées).

Les deux bits Zh et ZI sont appliqués en entrée d'une porte ET logique 14 qui délivre un premier bit $Z_1$ qui indique si les bits significatifs du résultat $b_0$ à $b_{31}$ calculé par l'unité arithmétique et logique sont tous nuls ($Z_1=1$) ou pas ($Z_1=0$).

Selon l'invention, le circuit conditionnel élabore un autre bit $Z_4$ au moyen de circuits logiques 15 à 17.

Une porte ET logique 15 reçoit le bit Zh sur une entrée et le bit $b_{15}$ sur une entrée inverseuse. Elle délivre une sortie logique $Z_2$ égale à 1 si les bits $b_{15}$ et $b_{16}$ à $b_{31}$ sont tous nuls, égale à zéro sinon.

Une porte ET logique 16 reçoit sur une entrée le bit Z du registre de condition RC et reçoit le bit $b_{15}$ du résultat en sortie de l'unité arithmétique et logique sur une entrée inverseuse. Elle délivre une sortie logique $Z_3$ appliquée en entrée d'une porte OU 17, qui reçoit sur une deuxième entrée la sortie $Z_2$ de la porte 15. Cette porte 17 délivre en sortie un bit de résultat , forcé à 1 si les bits $b_{15}$ et $b_{16}$ à $b_{31}$ sont nuls, ou si le bit Z du registre de condition est égal à 1 et que le bit $b_{15}$ est nul. Le bit $Z_4$ est égal à zéro sinon.

Enfin, la sortie ZI du premier circuit de comparaison 12 est aussi utilisée, pour indiquer si le quotient résultat de la division exprimé sur les 16 bits de poids faibles est nul ou pas, ce qui permet, comme on le verra, de corriger le reste de la division. Ces trois bits $Z_1$, $Z_4$ et ZI sont appliqués en entrée d'un multiplexeur 18 qui commande l'état du bit $Z_C$ qui est mémorisé dans le bit Z du registre de condition RC.

Le circuit conditionnel comprend encore un circuit de saturation 19 qui reçoit principalement de l'unité arithmétique et logique les bits $C_1$ et $C_2$ de report de poids le plus fort et le bit de signe Sr pour déterminer si il y a dépassement de capacité et fournit un bit d'information $OVF_1$ correspondant et éventuellement fournit une valeur saturée correspondante en sortie ($Op_{s1}$).

Selon l'invention, il comprend aussi un circuit logique pour déterminer si la division d'un dividende et d'un diviseur présentés en entrée de l'unité arithmétique et logique est possible ou non, c'est à dire si la valeur absolue du dividende est strictement inférieure à la valeur absolue du diviseur (en considérant les nombres comme étant exprimés dans le format fractionnel). Il consiste à regarder si le résultat d'une soustraction, si les deux opérandes sont de même signe ou d'une addition si ils sont de signes opposés, est strictement négatif ou pas.

Dans l'exemple, il comprend une première porte logique 20 de type NON OU exclusif qui reçoit en entrées les bits Sr du résultat en sortie de l'unité arithmétique et logique qui a effectuée l'addition ou la soustraction et le bit de signe de l'opérande gauche, dans l'exemple $g_{39}$ et une deuxième porte logique 21 de type OU qui reçoit en entrée la sortie de la porte 20 et le premier bit $Z_1$ qui indique un résultat nul. La sortie de la porte 21 fournit une information $OVF_2$, qui, si elle vaut 1, indique qu'une division de l'opérande gauche par l'opérande droit n'est pas possible, le dividende n'étant pas strictement inférieur au diviseur (en valeur absolue).

Un multiplexeur 22 est prévu qui commute l'un ($OVF_1$) ou l'autre ($OVF_2$) bit sur le bit $OVF_C$ qui est mémorisé dans le bit OVF du registre de condition RC.

Tous les différents circuits décrits sont commandés par l'unité de commande 1 :

- l'unité arithmétique et logique, par une commande mALU,
- le circuit conditionnel par une commande $mCOND_1$ qui commande le multiplexeur 18 du circuit d'établissement du bit $Z_C$ et une commande $mCOND_2$ qui commande le multiplexeur 22 du circuit d'établissement du bit $OVF_C$.
- le registre de condition RC par une commande mRC, qui permet à l'unité de commande d'écrire dans ce registre, tout ou partie des bits de condition précédement décrits.
- le décaleur D par une commande mD,
- le multiplexeur 2 sur l'entrée gauche de l'unité arithmétique et logique, par une commande m2,

- le multiplexeur Mux pour appliquer une retenue sur l'unité arithmétique et logique par une commande mMux,
- le multiplexeur 9, pour commander le bit $CS_C$ vers le bit CS du registre de condition, par une commande m9.

Le procédé de commande du dispositif de l'invention peut alors être décrit, avec le diviseur dans le registre source, sur l'opérande droit et le dividende dans l'accumulateur, sur l'opérande gauche.

L'unité de commande positionne les bits SD et SG exprimant le type signé des opérandes droit et gauche. Il est à noter qu'il suffit d'en positionner un par exemple celui du diviseur, car on ne peut travailler que sur des opérandes de même type.

Selon la représentation des figures 1 et 2, avec une unité arithmétique et logique de 40 bits dont 8 bits d'extension, le format des opérandes est de préférence le suivant : le dividende est exprimé sur 32 bits selon le format long (bit de format long LG positionné dans le registre de condition).

Le diviseur a une grandeur exprimée sur 16 bits. Le bit de format court LD est donc positionné dans le registre de condition. Il est mémorisé dans le registre Reg.

On suppose que l'on effectue une division signée (SD=SG=1). Sur commande de l'unité de commande qui a lu préalablement les bits SD, LD, SG et LD, le dividende est chargé sur l'entrée gauche de l'unité arithmétique et logique, avec le bit de signe sur le bit de position 31, et extension du signe sur les bits 32 à 39. Le diviseur est chargé sur l'entrée droite de l'unité arithmétique et logique, sur les 16 bits de poids forts 16 à 31 avec les 16 bits (position 0 à 15) les moins significatifs mis à zéro (format court). Le signe est étendu sur les bits de position 32 à 39 (type signé).

Selon l'invention, si on ne connaît pas le signe respectif des opérandes (dividende et diviseur), on exécute une première instruction de comparaison du signe, dont le but est de déterminer si les opérandes ont le même signe ou pas. L'unité de commande reçoit donc une instruction CMPS de comparaison des signes qui commande au multiplexeur 9 (commande m9) de commuter le bit $CS_1$ vers la sortie $CS_C$ du multiplexeur. Le bit $CS_1$ est fourni par le OU exclusif des signes des opérandes. Si on connaît le signe des opérandes, l'unité de commande peut directement commuter le bit $CS_3$ vers le bit $CS_c$. Le bit $CS_c$ est alors mémorisé dans le bit CS du registre de condition RC.

Ensuite, on vérifie que la division est possible. En effet, pour mettre en oeuvre l'algorithme de division sans restauration des restes partiels, il faut que la valeur absolue du dividende soit strictement inférieure à la valeur absolue du diviseur (en considérant les nombres comme étant exprimés dans le format fractionnel). Selon l'invention, on utilise le bit de dépassement de capacité OVF dans le registre de condition pour indiquer une invalidité de la division, mais qui est calculé différemment pour la division comme on l'a vu ($OVF_2$, figure 2, circuits 20 et 21).

L'unité de commande qui reçoit l'instruction CHKDIV correspondante, lit le bit de comparaison de signe CS du registre de condition RC précédemment positionné, et si sa valeur est 1, indiquant des signes opposés des opérandes, elle commande à l'unité arithmétique et logique d'additionner les deux opérandes, et si sa valeur est zéro, de soustraire le diviseur (opérande droit) au dividende (opérande gauche). Ces opérations se font sans sortie du résultat vers l'accumulateur qui reste inchangé. Puis l'unité de commande envoie au multiplexeur 22 du circuit conditionnel COND une commande de commutation $mCOND_2$ du bit $OVF_2$ vers le bit $OVF_C$ qui est mémorisé dans le bit OVF du registre de condition. On a alors :

$$OVF_C = OVF_2 = !(Sr \oplus g_{39}) + Z_1$$

(le signe ! indique qu'il faut prendre le complément).

Le bit OVF mémorisé dans le registre RC est donc égal à 1 si le résultat sur les bits 0 à 31 est nul ou si le signe du résultat donné par le bit Sr en sortie de l'unité arithmétique et logique (et égal en pratique au bit $b_{39}$ du résultat) et le signe du dividende sont identiques.

Si la division est possible (OVF=0) on peut ensuite effectuer le premier pas de division. Selon l'invention, le premier pas de division consiste à calculer le bit de signe du quotient, à calculer le nouveau reste partiel (le premier reste partiel) et à calculer le bit de quotient complémenté NQ pour le pas suivant. On utilise pour cela une instruction DIVS, utilisée une seule fois pour effectuer la division signée. On peut déjà noter que l'on connaît le bit de signe du quotient, donné par le bit CS, positionné par $CS_1$ ou directement par l'unité de commande.

Sur réception de l'instruction DIVS, l'unité de commande effectue les instructions suivantes :

- envoi d'une commande mD au décaleur pour qu'il effectue un décalage d'une position vers la gauche du contenu de l'accumulateur (qui est encore le dividende).
- envoi d'une commande m2 au multiplexeur 2 en entrée de l'opérande gauche, pour qu'il commute le bit CS du registre de condition sur le bit de position la moins significative de l'opérande gauche. On a donc en entrée gauche de l'unité arithmétique et logique le dividende décalé de 1 bit vers la gauche avec le bit CS sur son bit $g_0$: le bit $g_0$ est le quotient partiel de ce premier pas de division qui représente le bit de signe.
- envoi d'une commande mALU sur l'unité arithmétique et logique, pour une soustraction du diviseur au reste partiel si le bit CS est égal à zéro, ou pour une addition si le bit CS est égal à 1, avec sauvegarde du résultat dans l'accumulateur. On rappelle que les 16 bits de poids 0 à 15 du diviseur valent zéro (format court) : seuls les bits de poids 16 à 39 sont affectés par cette opération, les bits de poids 0 à 15 de l'opérande gauche reste inchangés. On a donc calculé le reste partiel.

- Sauvegarde dans le registre de condition RC du bit de quotient complémenté NQ donné par :

$$NQ = (Sdiv) \text{ XOR } Sr,$$

c'est à dire que le bit de signe en division signée (où SD=1) est donné par le ou exclusif entre le bit de signe du diviseur et le bit de signe du nouveau reste partiel calculé Sr (bit $b_{39}$).

- enfin, envoi d'une commande $mCOND_1$ sur le multiplexeur 18 du circuit conditionnel pour commuter le bit $Z_4$ de reste partiellement nul sur le bit $Z_C$ qui est mémorisé dans le bit Z du registre de condition RC, révélant une occurrence de reste partiellement nul selon l'invention, sur ce premier pas de division.

On peut alors passer aux pas de division suivants. Une fois le pas de division du calcul du bit de signé du quotient effectué, il faut calculer les bits suivants du quotient.

Selon l'invention, on utilise pour cela une instruction notée DIVQ qui calcule le nouveau quotient partiel, puis le nouveau reste partiel, puis le bit de quotient complémenté NQ pour le pas suivant et enfin mémorise l'occurrence d'un reste partiellement nul ou la confirmation d'un reste partiellement nul précédent.

Sur instruction DIVQ selon l'invention, l'unité de commande effectue alors les opérations suivantes :

- envoi d'une commande mD au décaleur pour décaler le contenu de l'accumulateur d'une position vers la gauche, avec transfert vers l'opérande gauche.
- envoi d'une commande m2 au multiplexeur 2 pour commuter l'inverse du bit NQ du registre de condition sur le bit le moins significatif $g_0$ de l'opérande gauche.
- envoi d'une commande mALU à l'unité arithmétique pour effectuer la soustraction ou l'addition du diviseur avec l'opérande gauche ainsi calculée, selon la valeur 0 ou 1 du bit NQ du registre de condition, avec sauvegarde du résultat dans l'accumulateur.
- calcul du bit de quotient complémenté NQ dans le registre de condition, comme vu précédemment, pour le pas de division suivant.
- mise à jour du bit Z du registre de condition avec le bit $Z_4$ d'information de reste partiellement nul selon l'invention, par envoi d'une commande de commutation $mCOND_1$ sur le multiplexeur 18 du circuit de condition.

On rappelle que selon l'invention, on teste d'une part si les bits 15 et 16 à 31 qui sont les bits de poids forts du reste partiel sont tous nuls, pour positionner à 1 l'information de reste partiellement nul et on teste d'autre part le bit 15 avec le bit de reste partiellement nul déjà positionné à 1 pour vérifier, au fur et à mesure que le contenu du registre accumulateur est décalé vers la gauche, si les autres bits du reste partiel de poids plus faibles décalés progressivement vers les poids forts sont également nuls. Si ce n'est pas le cas, le bit d'information de reste partiellement nul est remis à zéro. En résumé, si au pas i, on trouve un reste partiellement nul, on teste ensuite à chaque pas suivant si le bit de poids plus faible décalé sur le bit 15 est nul ou pas. Si à un pas i+k, on trouve un bit 15 non nul, cela veut dire que le reste du pas i n'était pas entièrement nul. Parallèlement à ce test, on continue à chaque pas de tester si le nouveau reste partiel calculé est partiellement nul ou pas. A la fin de la division, le bit Z indique s'il y a eu un reste partiel entièrement nul ou pas. La détection se fait donc tout au long de la division avec une mémoire de ce qui se passe, et la détection est interprétée à la fin de la division. On contrôle ainsi de manière judicieuse la nullité d'un opérande de taille variable. On notera qu'il ne peut se produire qu'un seul reste partiel nul au cours d'une division.

Quand on a effectué un pas de division DIVS et quatorze pas de division DIVQ, la dernière instruction DIVQ donne donc le bit Z final qui montre si on a eu un reste partiel nul ou pas.

Il reste alors à corriger le quotient partiel pour obtenir le quotient final. Selon l'invention, on prend en compte en une seule fois toutes les conditions pour lesquelles il faut ajouter une unité sur la position la moins significative.. Selon l'invention, on utilise le circuit conditionnel 5 pour calculer un bit cumulatif représentatif $CS_2$ et on utilise l'entrée de retenue Cin de l'unité arithmétique et logique pour ajouter ce bit $CS_2$ sur la position la moins significative du quotient, avec sauvegarde du résultat dans l'accumulateur. Un exemple de réalisation du circuit conditionnel a été décrit en relation avec la figure 1. La condition cumulative est donnée par : $CS_2 = (Sdiv.Z) + (\overline{Z}.CS)$.

Ce bit combine les deux cas où l'on doit corriger le quotient : celui où le dividende et le diviseur sont de signes opposés, ce qui est donné par le bit CS du registre de condition et celui où le diviseur est négatif et qu'il y a eu au moins un reste partiel entièrement nul au cours de la division : dans ce cas en effet, le reste partiel a été considéré comme positif, ce qui a conduit à un bit NQ égal à 1, soit un bit dans le quotient partiel égal à zéro au pas suivant. En fait, un reste nul doit être considéré comme de même signe que le diviseur et donc introduire pour le pas suivant un bit dans le quotient égal à 1 (NQ égal à 0).

Dans les deux cas, la post-incrémentation du résultat corrige le quotient.

L'unité de commande qui reçoit l'instruction de corriger le quotient RESQ effectue alors les commandes suivantes :

- envoi d'une commande mD au décaleur D pour qu'il charge comme opérande gauche le contenu de l'accummulateur décalé d'une position vers la gauche.

- envoi d'une commande m2 au multiplexeur 2 pour qu'il commute l'inverse du bit NQ sur le bit le moins significatif de l'opérande gauche.

- envoi d'une commande mMux sur le multiplexeur Mux pour commuter le bit $CS_2$ du circuit conditionnel 5 sur l'entrée de retenue Cin de l'unité arithmétique et logique.

- envoi d'une commande mALU sur l'unité arithmétique et logique pour qu'elle ajoute la retenue à l'opérande gauche et sauvegarde le résultat dans l'accumulateur. On a alors dans l'accumulateur le quotient juste, au format signé, sur les 16 bits de poids faibles. Le reste est exprimé sur les 24 autres bits.

- envoi d'une commande m9 sur le multiplexeur 9 pour commuter le bit $CS_2$ dans le bit CS du registre de condition.

- envoi d'une commande mCOND1 au multiplexeur 18 du circuit de condition 5 pour commuter le bit ZI sur le bit Z du registre de condition, qui indique alors si le quotient corrigé est nul ou pas.

L'instruction RESQ selon l'invention calcule donc les nouveaux bits Z et CS. On remarquera que le bit CS est inchangé, si il n'y a pas eu de détection de reste partiel. Le bit ZI vaut 1 si les 16 bits de poids faible (quotient) du résultat de l'opération dans l'unité arithmétique et logique valent zéro.

Cette condition sert à corriger le reste dans le cas où le quotient avant l'instruction RESQ ne comportait que des 1, et que $CS_2$ valait 1 : le quotient vaut alors zéro, mais la propagation de la retenue entraîne que le reste partiel est modifié.

La mise à jour du bit CS avec le bit $CS_2$ sert aussi à corriger le reste partiel.

Selon l'invention, on exécute une instruction de correction du reste partiel RESR. L'unité de commande effectue des tests sur les bits CS, NQ et Z du registre de condition. On a vu que le bit Z est donné par ZI et sert à corriger une erreur due à la correction du quotient.

Le bit CS lui contient le bit $CS_2$ de correction du quotient. Le bit NQ lui contient le dernier bit de quotient complémenté calculé par la dernière instruction DIVQ (l'instruction RESQ ne modifie pas le bit NQ, l'unité de commande n'envoyant pas de commande mRC du bit NQ sur le registre de condition pour cette instruction).

Si CS = NQ, l'unité de commande ne fait rien.

Si CS=0 et NQ=1, l'unité de commande ajoute le diviseur au reste partiel. Pour cette opération, elle commande avantageusement le registre Reg qui contient le diviseur sur le déca leur auquel elle envoie une commande mD de décalage d'une position vers la gauche, pour obtenir deux fois le diviseur sur l'opérande gauche et envoie le contenu de l'accumulateur sur l'opérande droit (flèches en pointillés).

Si CS=1 et NQ=0, l'unité de commande soustrait deux fois le diviseur à l'accumulateur. Dans ce dernier cas, l'unité de commande fait calculer à l'unité arithmétique et logique la somme de l'accumulateur (opérande droit) et du complément à 2 de deux fois le diviseur (opérande gauche) si Z=0, ou du complément à 1 de deux fois le diviseur si Z=1 (effectivement, dans ce cas, l'incrémentation "+1" que l'on a dans le calcul du complément à 2 a déjà été faite dans l'instruction RESQ).

Le résultat de l'unité arithmétique et logique est alors chargé dans l'accumulateur, mais seulement pour les 24 bits de poids le plus fort. Le quotient reste inchangé dans les 16 bits de poids le plus faible et le reste vrai se situe alors dans les 24 bits de poids le plus fort.

La division signée qui vient d'être expliquée en relation avec le dispositif de mise en oeuvre selon l'invention concerne des opérandes au format fractionnel. Si les opérandes sont au format entier, on effectue avant un décalage du dividende d'une position vers la gauche, après que la comparaison de signe (CS) ait été effectuée. Le reste devra s'interpréter à la fin de la division comme étant le double du reste vrai.

Par contre, la vérification que la division est possible, est effectuée après le décalage du dividende.

En ce qui concerne la division non signée, il n'y a pas de signe bit. Il faut quand même selon l'invention exécuter une instruction DIVS de calcul du signe du quotient, pour calculer le premier bit de quotient. Cette instruction génère un premier bit dans le quotient non significatif. Puis il faut exécuter 15 instructions DIVQ pour calculer les autres bits du quotient. On a donc une instruction DIVQ supplémentaire. Le quotient est maintenant exprimé sur 17 bits, mais le bit de poids 16 qui représente le bit de signe est ici non significatif. Le reste est alors représenté par les 23 bits de poids le plus fort.

Le changement du mode de division signé au mode de division non signé se fait par modification du bit SD du registre de condition : SD=0 indique que le diviseur est non signé et donc que Sdiv=0. Pour le dividende, il suffit que les 8 bits d'extension contiennent des 0.

Dans le cas de la division non signée, il n'y a pas de différences selon que le format des opérandes est entier ou fractionnel, qui ne joue que sur l'interprétation du résultat au final.

Avec le dispositif de mise en oeuvre selon l'invention et les différents circuits combinatoires et de multiplexage, on réalise avantageusement chacune des différentes instructions en un seul cycle. Et un utilisateur n'a pas à mettre en oeuvre des routines d'exception pour corriger le résultat, sauf à traiter le cas où la division est impossible ($OVF_2$)

Dans un exemple en division signée de nombre fractionnels, une division signée 32 bits par 16 nécessite 18 instructions élémentaires (CMPS, CHDIV, DIVS, 14 fois DIVQ, RESQ), plus une éventuellement, si on veut corriger le reste, dans le cas où on en a besoin, pour d'autres calculs (il faut aussi rajouter une instruction pour initialiser le compteur de boucle DIVQ). Le quotient est exprimé sur 16 bits au final.

On peut bien sûr choisir moins de bits de quotient (donc moins de pas de division DIVQ), si il n'est pas nécessaire d'avoir autant de précision.

## Revendications

1. Dispositif de mise en oeuvre numérique d'une opération de division d'un dividende par un diviseur selon une méthode du type à non-restauration de reste partiel, comprenant

   une unité arithmétique et logique pour effectuer le calcul des restes partiels,
   un circuit de détection de restes partiels nuls au cours de la division,
   un accumulateur initialisé avec le dividende et qui contient ensuite pour chaque pas de division, le reste sur les bits de plus forts poids et le quotient sur les bits de plus faibles poids,
   un registre de condition (RC) contenant des bits d'information sur la dernière opération arithmétique ou logique effectuée,
   un registre source (Reg) en entrée d'un opérande droit ($Op_1$) de l'unité arithmétique et logique, pour contenir les n bits du diviseur,

   caractérisé en ce qu'il comprend un décaleur (D) en entrée de l'opérande gauche ($Op_2$) de l'unité arithmétique et logique, pour effectuer le décalage d'une position vers la gauche du contenu de l'accumulateur et un multiplexeur (2) pour fournir au premier pas de calcul du quotient (DIVS), un bit de comparaison des signes du diviseur et du dividende ($CS_1$) mémorisé dans un bit (CS) du registre de condition et qui représente le bit de signe du quotient, et pour fournir comme bit de poids le plus faible ($g_0$) de l'opérande gauche aux pas suivants de calcul du quotient (DIVQ), un bit de quotient complémenté (NQ) calculé au pas i-1 précédent et mémorisé dans le registre de condition, qui représente le bit le moins significatif du quotient au pas i de calcul du quotient et en ce qu'à chaque pas de calcul du quotient, un bit de détection de zéro calculé par le circuit de détection de restes partiels nuls est mis à jour dans un bit (Z) du registre de condition.

2. Dispositif selon la revendication 1, caractérisé en ce que le circuit de détection de reste partiel nul comprend des circuits combinatoires pour calculer un bit de détection de zéro à chaque pas i de division pour remettre à jour un bit (Z) du registre de condition, en sorte que ce bit calculé au pas i égale 1 si tous les bits $b_{16}$ à $b_{31}$ et le bit $b_{15}$ du résultat contenu dans l'accumulateur sont nuls ou si le bit de détection calculé au pas i-1 précédent et mémorisé (Z) dans le registre de condition est égal à 1 et que le bit $b_{15}$ est nul.

3. Dispositif selon la revendication 2, caractérisé en ce qu'il comprend un circuit de correction du quotient comprenant un circuit combinatoire pour calculer un bit de correction ($CS_2$) du quotient, en sorte que ce bit ($CS_2$) égale 1 si le diviseur est négatif (Sdiv=1) et qu'il y a eu détection d'un reste entièrement nul (Z=1) ou si il n'y a pas eu de reste entièrement nul de détecté (!Z=1) mais que le diviseur et le dividende sont de signes différents (CS=$CS_1$=1), et un multiplexeur (MUX) pour appliquer le bit de correction d'erreur ($CS_2$) comme bit de retenue entrante (Cin) sur l'unité arithmétique et logique.

4. Dispositif selon la revendication 3, caractérisé en ce que le bit de correction du quotient est ensuite mémorisé dans un bit (CS) du registre de condition et en ce qu'un bit ($Z_l$) indiquant si tous les bits b0 à b15 du quotient corrigé sont nuls est mémorisé dans le registre de condition, pour établir la manière dont le reste partiel doit être corrigé.

## Patentansprüche

1. Vorrichtung zur digitalen Durchführung einer Divisionsoperation nach der Methode der Zwischenrestvernachlässigung, die umfaßt:

   eine arithmetische Logikeinheit zur Berechnung des Zwischenrests,
   eine Schaltung zum Erkennen von Zwischenresten Null im Lauf der Division,
   einen mit dem Dividenden initialisierten Akkumulator, der anschließend für jeden Divisionschritt den Rest auf den Bits mit dem höchsten Gewicht und den Quotient auf den Bits mit dem niedrigsten Gewicht enthält,
   ein Zustandsregister (RC), das Informationsbits über die letzte ausgeführte arithmetische oder logische Operation enthält,
   ein Quellenregister (Reg) am Eingang für einen rechten Operanden ($Op_1$) der arithmetischen Logikeinheit für die n Bits des Nenners,

   dadurch gekennzeichnet, daß
   sie ein Schieberegister (D) am Eingang für den linken Operanden ($Op_2$) der arithmetischen Logikeinheit aufweist, um den Inhalt des Akkumulators um eine Position nach links zu verschieben, und einen Multiplexer (2), um beim ersten Berechnungsschritt des Quotienten (DIVS) ein Vergleichsbit der Vorzeichen des Nenners und des Zählers ($CS_1$) zu liefern, das in einem Bit (CS) des Zustandsregisters gespeichert ist und das das Vorzeichenbit des Quotienten darstellt, und um als Bit mit niedrigstem Gewicht des linken Operanden bei den folgenden Schritten der Berechnung des Quotienten (DIVQ) ein komplementäres Quotientenbit (NQ) zu liefern, das im vorherigen Schritt i-1 berechnet wurde und im Zustandsregister gespeichert wurde, das das Bit mit dem niedrigsten Gewicht des Quotienten beim Schritt i der Berechnung des Quotienten darstellt, und daß bei jedem Berechnungsschritt des Quotienten ein Null-Erkennungsbit, das durch die Schaltung für das Erkennen von Zwischenresten Null berechnet wurde, mit einem Bit Z des Zustandsregisters belegt wird.

2. Vorrichtung nach Anspruch 1, dadurch gekennzeichnet, daß die Schaltung für das Erkennen eines Zwischenrestes Null Kombinatorikschaltungen aufweist, um ein Null-Erkennungsbit bei jedem Schritt i der Division zu berechnen, um ein Bit (Z) des Zustandsregisters zu aktualisieren, so daß das im Schritt i berechnete Bit gleich 1 ist, wenn alle Bits $b_{16}$ bis $b_{31}$ und das Bit $b_{15}$ des im Akkumulator gespeicherten Ergebnisses Null sind, oder wenn das im vorherigen Schritt i-1 berechnete und im Zustandsregister gespeicherte (Z) Erkennungsbit gleich 1 ist und das Bit $b_{15}$ gleich Null ist.

3. Vorrichtung nach Anspruch 2, dadurch gekennzeichnet, daß sie eine Schaltung zur Korrektur des Quotienten, die eine Kombinatorikschaltung aufweist, um ein Korrekturbit ($CS_2$) des Quotienten zu berechnen, so daß dieses Bit ($CS_2$) gleich 1 ist, wenn der Nenner negativ ist (Sdiv = 1) und die Detektion eines Restes, der gänzlich Null war (Z = 1), erfolgte oder kein Erkennen eines Restes, der gänzlich Null war, erfolgte (!Z = 1), aber der Nenner und der Dividend ein unterschiedliches Vorzeichen haben (CS = $CS_1$ = 1), und einen Multiplexer (MUX) um das Fehlerkorrekturbit ($CS_2$) als Übertragsbit (Cin) am Eingang der arithmetischen Logikeinheit anzulegen.

4. Vorrichtung nach Anspruch 3, dadurch gekennzeichnet, daß das Bit zur Korrektur des Quotienten anschließend in einem Bit (CS) des Zustandsregisters gespeichert wird und ein Bit (ZI), das anzeigt, ob alle Bits $b_0$ bis $b_{15}$ des verbesserten Quotienten Null sind, im Zustandsregister gespeichert wird, um die Art und Weise darzustellen, wie der Rest korrigiert werden muß.

**Claims**

1. Device for digitally carrying out an operation of dividing a dividend by a divisor according to a method of the partial remainder non-regeneration type, comprising

an arithmetic logic unit for performing the calculation of partial remainders,

a circuit for detecting nil partial remainders during the division,

an accumulator initialised with the dividend and which then contains, for each division step, the remainder in the most significant bits and the quotient in the least significant bits,

a condition register (RC) containing information bits about the last arithmetic or logic operation performed,

a source register (Reg) at the input of a right operand ($Op_1$) of the arithmetic logic unit, for containing the n bits of the divisor,

characterised in that it comprises a shifter (D) at the input of the left operand ($Op_2$) of the arithmetic logic unit, for shifting the content of the accumulator by one position to the left, and a multiplexer (2) for supplying, at the first quotient calculation step (DIVS), a divisor and dividend sign comparison bit ($CS_1$) which is stored in a bit (CS) of the condition register and which represents the quotient sign bit, and for supplying, as the least significant bit ($g_0$) of the left operand at the following quotient calculation steps (DIVQ), a complemented quotient bit (NQ) calculated at the previous step i-1 and stored in the condition register, which represents the least significant bit of the quotient at the quotient calculation step i, and in that, at each quotient calculation step, a zero detection bit calculated by the circuit for detecting nil partial remainders is updated in a bit (Z) of the condition register.

2. Device according to Claim 1, characterised in that the circuit for detecting nil partial remainders comprises combinatorial circuits for calculating a zero detection bit at each division step i in order to re-update a bit (Z) of the condition register, so that this bit calculated at step i equals 1 if all the bits $b_{16}$ to $b_{31}$ and bit $b_{15}$ of the result contained in the accumulator are nil or if the detection bit calculated at the previous step i-1 and stored (Z) in the condition register is equal to 1 and bit $b_{15}$ is nil.

3. Device according to Claim 2, characterised in that it comprises a quotient correction circuit comprising a combinatorial circuit for calculating a quotient correction bit ($CS_2$), so that this bit ($CS_2$) equals 1 if the divisor is negative (Sdiv=1) and an entirely nil remainder (Z=1) has been detected or if an entirely nil remainder has not been detected (!Z=1) but the divisor and dividend are of different signs (CS=$CS_1$=1), and a multiplexer (MUX) for applying the error correction bit ($CS_2$) as an incoming carry bit (Cin) to the arithmetic logic unit.

4.  Device according to Claim 3, characterised in that the quotient correction bit is next stored in a bit (CS) of the condition register and in that a bit (ZI) indicating whether all the bits b0 to b15 of the corrected quotient are nil is stored in the condition register, in order to establish the manner in which the partial remainder is to be corrected.

FIG_1

FIG_2